# EUROPEAN PATENT APPLICATION

(11) **EP 3 473 499 A1**
(43) Date of publication of application: **24.04.2019**
(21) Application number: 17204281.4
(22) Date of filing: 29.11.2017
(51) Int. Cl.: B60R 19/48

(54) **MOUNTING MECHANISM FOR VEHICLE SENSOR**

(30) Priority: 19.10.2017 TW 106135988
(71) Applicant: CUB Elecparts Inc., Changhua County (TW)
(72) Inventor: YU, San-Chuan, CHANGHUA COUNTY (TW); YU, Yu-Tao, CHANGHUA COUNTY (TW); HO, Meng-Yu, CHANGHUA COUNTY (TW); CHEN, Yu-Ta, CHANGHUA COUNTY (TW); KO, Ming-Lung, CHANGHUA COUNTY (TW)
(74) Representative: Becker Kurig Straus

(57) **Abstract**

A mounting mechanism (10),(40),(60) for a vehicle sensor includes a fixing board (20) and a mounting base (30),(80). The fixing board (20),(50),(70) has a support portion (22),(72) and a plurality of flexible wing portions (24),(52),(74) connected to the edge of the support portion (22),(72). The mounting base (30),(80) is disposed at the support portion (22),(72) of the fixing board (20),(50),(70) and contains the vehicle sensor. The flexible wing portions (24),(52),(74) of the fixing board (20),(50),(70) are bent and deformed such that the fixing board (20),(50),(70) is fixed to various non-flat surfaces, for example, bends of the bumper, to render it easy to mount the vehicle sensor in place.

## Description

### BACKGROUND OF THE INVENTION

### 1. Technical Field

The present invention relates to vehicle sensors and, more particularly, to a mounting mechanism for a vehicle sensor.

### 2. Description of Related Art

As road safety awareness is on the rise, great importance is increasingly attached to various alarm systems used by vehicles in operation. In short, an alarm system includes a sensor (such as a collision-warning radar) mounted on a front (or rear) bumper of a vehicle to monitor the traffic flow in front of (or behind) the vehicle and send alert signals to the vehicle's driver, and thus the driver steers the vehicle in accordance with the alert signals, thereby reducing the likelihood of traffic accidents.

The sensor is usually mounted on a flat surface, such as the surface at the middle of the bumper, in order to be firmly fixed in place. If the sensor is mounted on a non-flat surface, such as a bend of the bumper, in an attempt to increase a detection range, not only is the mounting process difficult, but the sensor thus mounted is also structurally unstable.

### BRIEF SUMMARY OF THE INVENTION

It is an objective of the present invention to provide a mounting mechanism for a vehicle sensor to allow the vehicle sensor to be mounted on a non-flat surface, not only enhancing the ease of mounting the vehicle sensor in place, but also rendering the vehicle sensor structurally stable.

In order to achieve the above and other objectives, a mounting mechanism of the present invention comprises a fixing board and a mounting base. The fixing board has a support portion and a plurality of flexible wing portions. The plurality of flexible wing portions is connected to the edge of the support portion. The mounting base is disposed at the support portion of the fixing board to accommodate a vehicle sensor. Therefore, the present invention is characterized in that the flexible wing portions of the fixing board are bent and deformed such that the vehicle sensor is fixed to various non-flat surfaces (for example, surfaces of bends of the bumper) through the fixing board, allowing the vehicle sensor to be easily mounted in place and structurally stable when mounted in place.

Preferably, the flexible wing portions of the fixing board each have a slit. The slits allow the flexible wing portions to be bent easily.

Preferably, the rear side of each flexible wing portion of the fixing board has a groove. The grooves allow the flexible wing portions to be cut easily so as to meet spatial requirements of installation-related surroundings and allow the vehicle sensor to be mounted in place optimally.

Preferably, the front side of each flexible wing portion of the fixing board has a plurality of dent portions. Owing to the dent portions, the contact area between the adhesive and the mounted position increases, thereby increasing the bonding strength of the fixing board.

Preferably, the flexible wing portions of the fixing board each have a plurality of squeeze-out holes penetrating front and rear sides of the flexible wing portions. A surplus portion of the adhesive leaves the front sides of the flexible wing portions, passes through the squeeze-out holes, and reaches the rear sides of the flexible wing portions. Finally, the resultant adhesive on the rear sides of the flexible wing portions dries and takes on the function as rivets whereby the bonding strength of the fixing board further increases.

### BRIEF DESCRIPTION OF THE SEVERAL VIEWS OF THE DRAWINGS

FIG. 1 is a rear perspective view of a mounting mechanism according to the first embodiment of the present invention;
FIG. 2 is a rear exploded view of the mounting mechanism according to the first embodiment of the present invention;
FIG. 3 is a front perspective view of the mounting mechanism according to the first embodiment of the present invention;
FIG. 4 is a cross-sectional view of the mounting mechanism according to the first embodiment of the present invention, showing an adhesive disposed at dent portions;
FIG. 5 is a schematic view of operation of the mounting mechanism according to the first embodiment of the present invention, showing that flexible wing portions of a fixing board are bent and deformed;
FIG. 6 is a rear perspective view of the mounting mechanism according to the second embodiment of the present invention;
FIG. 7 is a rear perspective view of the mounting mechanism according to the third embodiment of the present invention;
FIG. 8 is a rear exploded view of the mounting mechanism according to the third embodiment of the present invention;
FIG. 9 is a cross-sectional view taken along line 9-9 of FIG. 7;
FIG. 10 is a cross-sectional view of the mounting mechanism according to the third embodiment of the present invention, showing the adhesive disposed at squeeze-out holes; and
FIG. 11 is a schematic view of operation of the mounting mechanism according to the third embodiment of the present invention, showing that the flexible wing portions are cut along a groove.

### DETAILED DESCRIPTION OF THE INVENTION

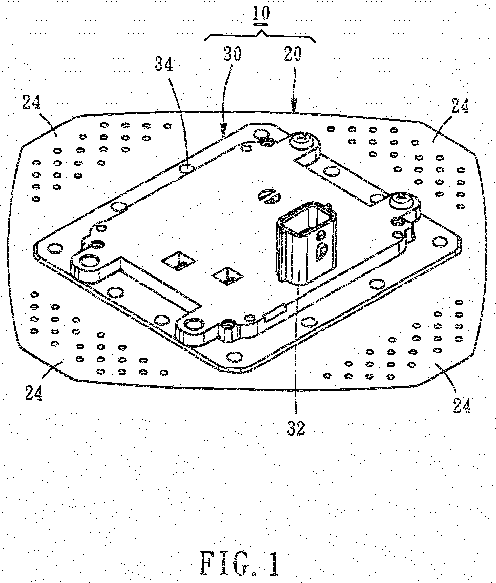

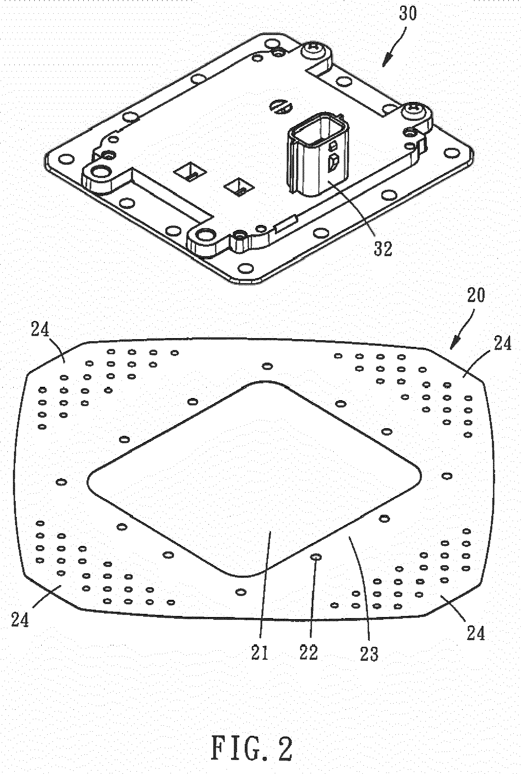

Referring to FIGs. 1, 2, in the first embodiment of the present invention, a mounting mechanism 10 comprises a fixing board 20 and a mounting base 30.

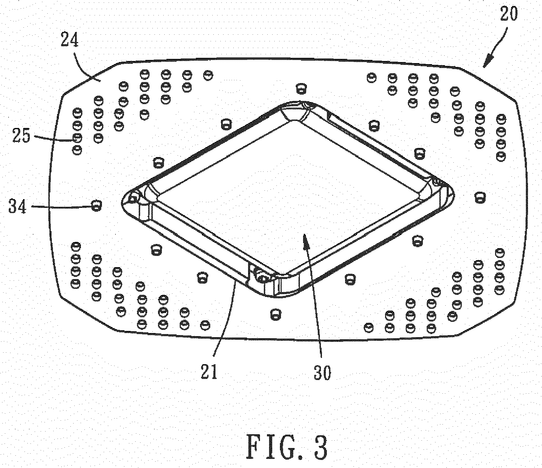

The fixing board 20 is made of spring steel. A hollowed-out recess 21 is disposed centrally at the fixing board 20 and penetrates front and rear sides thereof. The fixing board 20 has a support portion 22 which surrounds the hollowed-out recess 21. In this embodiment, the support portion 22 is flush with the rear side of the fixing board 20 and has a plurality of fixing holes 23. The fixing board 20 further has four flexible wing portions 24 of the same shape. The four flexible wing portions 24 are connected to the edge of the support portion 22 and each have a plurality of front-facing dent portions 25 (as shown in FIG. 3).

The mounting base 30 contains a vehicle sensor (such as a collision-warning radar). The mounting base 30 is engaged with the fixing holes 23 of the support portion 22 of the fixing board 20 by a plurality of fixing elements 34 (such as screws shown in FIG. 1) and thus mounted on the support portion 22 of the fixing board 20. As shown in FIGs. 1, 3, after the mounting base 30 has been mounted in place, the opening on the rear side of the hollowed-out recess 21 of the fixing board 20 is hidden by the mounting base 30. The mounting base 30 has a wiring-passing portion 32 extending away from the fixing board 20. Wires connected to the vehicle sensor pass through the wiring-passing portion 32.

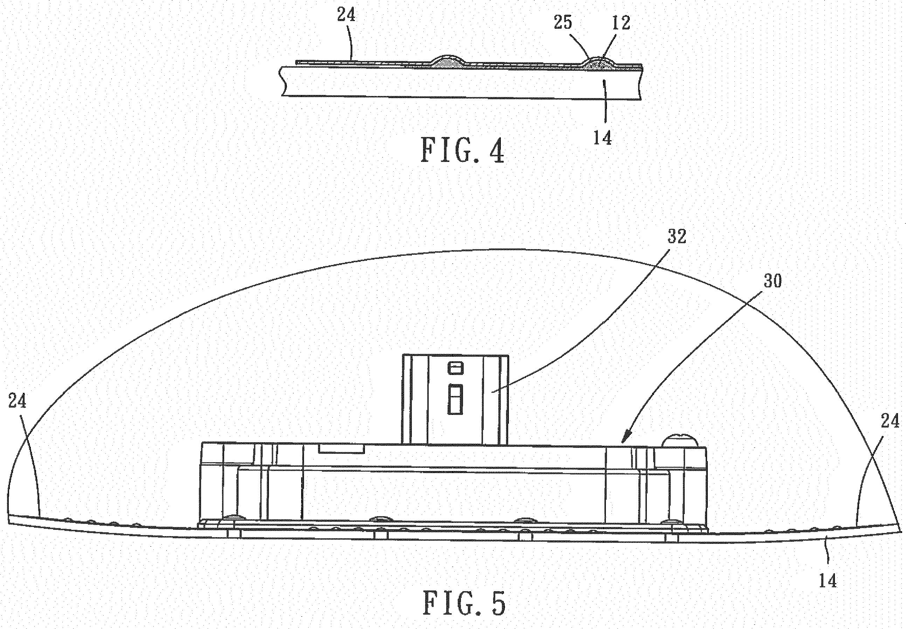

To start using the mounting mechanism 10, a driver coats an adhesive 12 on the front side of the flexible wing portions 24 of the fixing board 20 to adhere and fix in place the flexible wing portions 24 of the fixing board 20 in accordance with a mounted position 14 (for example, the middle of the bumper) of the vehicle sensor. At this point in time, as shown in FIG. 4, owing to the dent portions 25, the contact area between the adhesive 12 and the mounted position 14 increases, thereby increasing the bonding strength of the fixing board 20.

When the surface of the mounted position 14 (for example, the surface of a bend of the bumper) is not flat, the driver has to bend the flexible wing portions 24 of the fixing board 20 (in accordance with the physical properties of the fixing board 20) before coating the adhesive 12. Hence, as shown in FIG. 5, the flexible wing portions 24 of the fixing board 20 are bent and deformed appropriately in accordance with the curvature at the mounted position 14. Afterward, the driver adheres and fixes in place the flexible wing portions 24 of the fixing board 20 with the adhesive 12 to therefore mount the vehicle sensor on a non-flat surface.

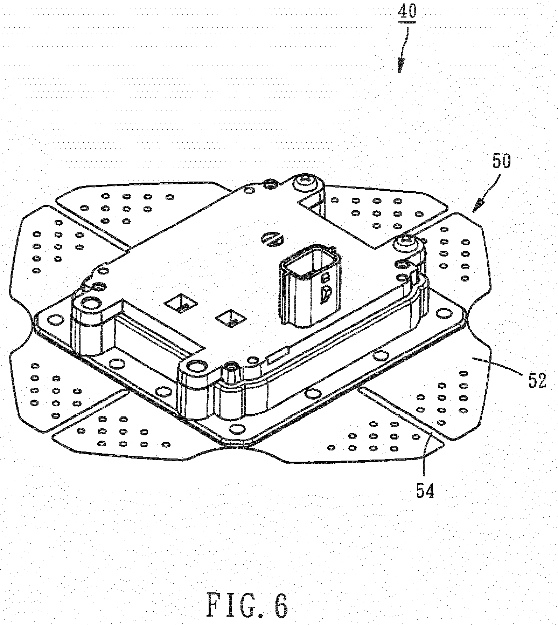

Referring to FIG. 6, a fixing board 50 of a mounting mechanism 40 in the second embodiment of the present invention is substantially identical to its counterpart in the first embodiment of the present invention except for technical features described below. In the second embodiment, a slit 54 is disposed centrally at each flexible wing portion 52 of the fixing board 50 such that the flexible wing portion 52 is divided into two halves by the slit 54. Therefore, the flexible wing portions 52 of the fixing board 50 can be bent easily because of the slits 54.

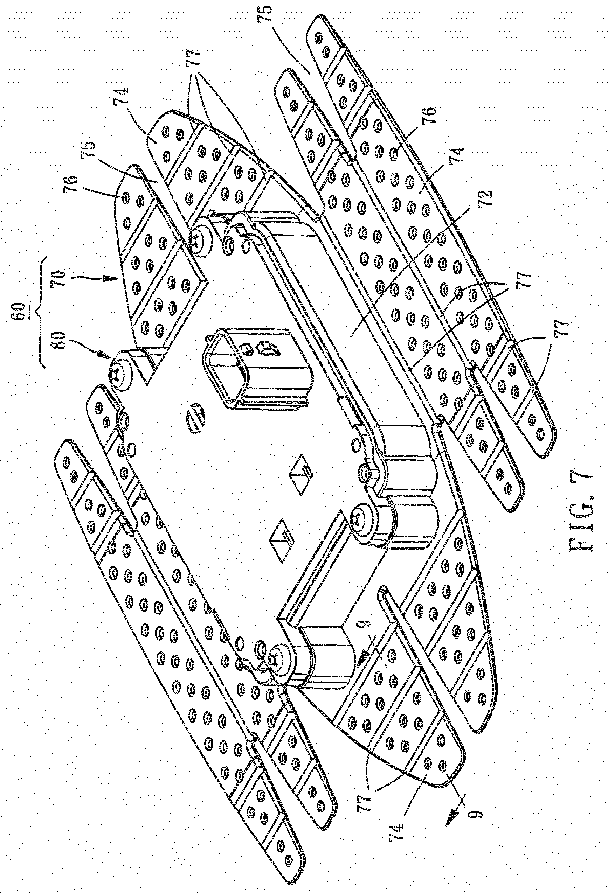

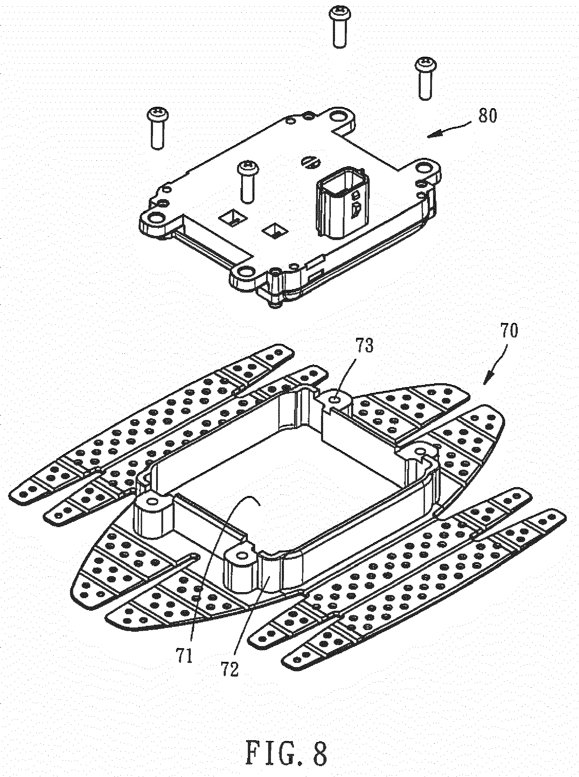

Referring to FIG. 7 and FIG. 8, a fixing board 70 of a mounting mechanism 60 in the third embodiment of the present invention is slightly different from its counterpart in the preceding two embodiments of the present invention in terms of structural features. In the third embodiment, a hollowed-out recess 71 is disposed centrally at the fixing board 70 to penetrate front and rear sides thereof, whereas the fixing board 70 further has a support portion 72 which surrounds the hollowed-out recess 71. In the third embodiment, the support portion 72 protrudes from the rear side of the fixing board 70 and has a plurality of fixing holes 73 whereby the fixing board 70 is fixed to a mounting base 80.

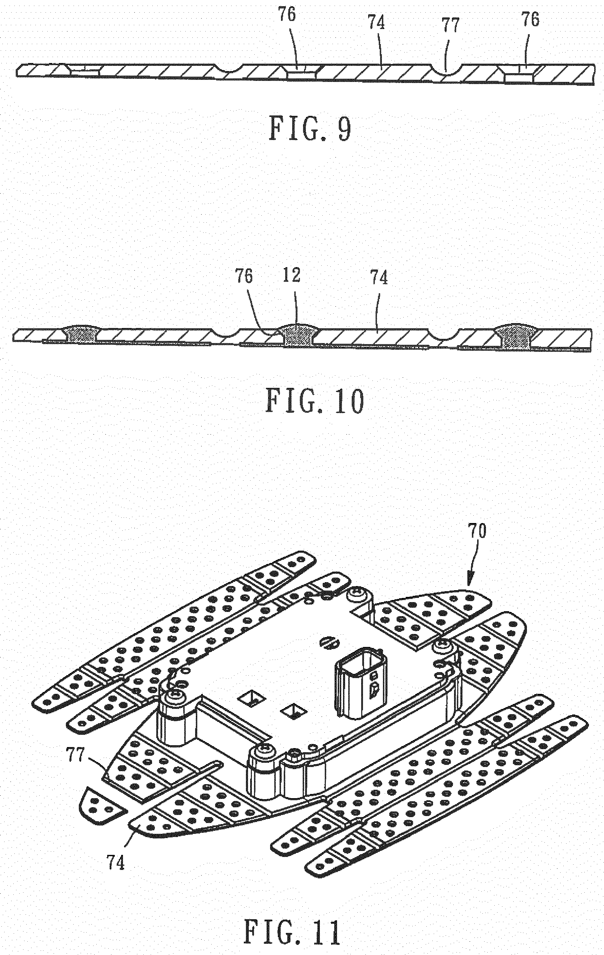

In the third embodiment, the fixing board 70 has four flexible wing portions 74 which are paired in twosomes and symmetric to each other. Like its counterpart in the second embodiment, each flexible wing portion 74 in the third embodiment has a slit 75. In the third embodiment, each flexible wing portion 74 further has a plurality of squeeze-out holes 76 penetrating front and rear sides of the flexible wing portion 74, as shown in FIG. 9 and FIG.

10. In the course of adhering the fixing board 70 in place with the adhesive 12, a surplus portion of the adhesive 12 leaves the front sides of the flexible wing portions 74, passes through the squeeze-out holes 76, and reaches the rear sides of the flexible wing portions 74. Finally, the resultant adhesive 12 on the rear sides of the flexible wing portions 74 dries and takes on the function as rivets whereby the bonding strength of the fixing board 70 further increases. As shown in FIG. 7, the rear side of each flexible wing portion 74 further has a plurality of grooves 77. The grooves 77 are located at different positions as needed, for example, at two ends of each flexible wing portion 74, at the center of each flexible wing portion 74, and at the junction of each flexible wing portion 74 and the support portion 72. Therefore, if the fixing board 70 is too large to be contained when mounted at the mounted position 14, the driver can cut the flexible wing portions 74 along at least one of the grooves 77 before adhering and fixing the fixing board 70 in place. As shown in FIG. 11, the fixing board 70 is made smaller before being adhered and fixed in place.

In conclusion, the mounting mechanisms 10, 40, 60 of the present invention are advantageous in that: the flexible wing portions 24, 52, 74 are bent and deformed to allow the fixing boards 20, 50, 70 to be fixed in place in accordance with various curvature at different mounted positions, respectively, such that the vehicle sensor is structurally stable when mounted in place; owing to the slits 54, 75 and the grooves 77, the flexible wing portions 52, 74 are not only bent easily but also cut as needed to downsize the fixing boards 20, 50, 70, respectively, allowing the vehicle sensor to be easily mounted in place.

## Claims

1. A mounting mechanism (10),(40),(60) for a vehicle sensor, comprising:
a fixing board (20),(50),(70) having a support portion (22),(72) and a plurality of flexible wing portions (24),(52),(74), with the plurality of flexible wing portions (24),(52),(74) connected to an edge of the support portion (22),(72); and
a mounting base (30),(80) disposed at the support portion (22),(72) of the fixing board (20),(50),(70).

2. The mounting mechanism (10),(40),(60) for a vehicle sensor according to claim 1, wherein the fixing board (20) ,(50),(70) has four said flexible wing portions (24),(52),(74), and the four flexible wing portions (24),(52),(74) are paired in twosomes and symmetric to each other with respect to the support portion (22),(72).

3. The mounting mechanism (10),(40),(60) for a vehicle sensor according to claim 1, wherein the flexible wing portions (24),(52),(74) of the fixing board (20),(50),(70) each have a slit (54).

4. The mounting mechanism (10),(40),(60) for a vehicle sensor according to claim 1, wherein the flexible wing portions (24),(52),(74) of the fixing board (20),(50),(70) each have a plurality of squeeze-out holes (76) penetrating front and rear sides of the flexible wing portions (24),(52),(74).

5. The mounting mechanism (10),(40),(60) for a vehicle sensor according to claim 1, wherein a front side of each said flexible wing portion (24),(52),(74) of the fixing board (20),(50),(70) has a plurality of dent portions (25).

6. The mounting mechanism (10),(40),(60) for a vehicle sensor according to claim 1, wherein a rear side of each said flexible wing portion (24),(52),(74) of the fixing board (20),(50),(70) has a groove (77).

7. The mounting mechanism (10),(40),(60) for a vehicle sensor according to claim 4, wherein a hollowed-out recess (21) is disposed at the fixing board (20),(50),(70) to penetrate front and rear sides thereof and surrounded by the support portion (22),(72), with the support portion (22),(72) being flush with a rear side of the fixing board (20),(50),(70) and having a plurality of fixing holes (23), whereas the mounting base (30) is engaged with the fixing holes (23) by a plurality of fixing elements (34) and thus mounted on the support portion (22),(72) to hide an opening on a rear side of the hollowed-out recess (21),(71).

8. The mounting mechanism (10),(40),(60) for a vehicle sensor according to claim 1, wherein a hollowed-out recess (21) is disposed at the fixing board (20),(50),(70) to penetrate front and rear sides thereof and surrounded by the support portion (22),(72), with the support portion (22),(72) being flush with a rear side of the fixing board (20),(50),(70) and having a plurality of fixing holes (23), whereas the mounting base (30) is engaged with the fixing holes (23) by a plurality of fixing elements (34) and thus mounted on the support portion (22),(72) to hide an opening on a rear side of the hollowed-out recess (21),(71).

9. The mounting mechanism (10),(40),(60) for a vehicle sensor according to claim 1, wherein the mounting base (30),(80) has a wiring-passing portion (32) extending away from the fixing board (20),(50),(70).
